# EUROPEAN PATENT APPLICATION

(11) **EP 2 365 162 A2**
(43) Date of publication of application: **14.09.2011**
(21) Application number: 11157713.6
(22) Date of filing: 10.03.2011
(51) Int. Cl.: E04H 17/14, F24J 2/00, F24J 2/04, F24J 2/05, F24J 2/24

(54) **A shield with high versatility**

(30) Priority: 12.03.2010 IT MI20100400; 28.04.2010 IT MI20100726
(71) Applicant: Vrapi, Irena, 23887 Olgiate Molgora (LC) (IT)
(72) Inventor: Vrapi, Irena, 23887 Olgiate Molgora (LC) (IT)
(74) Representative: Modiano, Micaela Nadia

(57) **Abstract**

A shield (1), comprising a pair of vertical posts (2, 3) connected by one or more plate-like elements (4), each one of the plate-like elements (4) accommodating heat exchange means (5) adapted to allow the flow of a fluid to be heated, said fluid being conveyed within the plate-like elements (4) through the vertical posts (2,3).

## Description

The present invention relates to a shield with high versatility. More specifically, the invention relates to a shield that is capable of acting as a normal perimeter fence and as a solar panel, or as a sunbreaker for buildings and as a solar panel.

As is known, solar panels are nowadays increasingly used for producing electricity or for heating up water, because this energy generation system is ecological and low cost.

Solar panels are generally used on the roofs of buildings to collect the incident solar rays and convert the solar energy to electricity and/or heat.

Similarly, it is known that each building is usually provided with a perimeter fence that delimits the surface belonging to the building and prevents unauthorised access thereto.

Moreover, architectural sunbreaker elements are currently widespread, which are connected to the façades of buildings and the like, and which allow light to pass through when required and which also protect from excessive heat.

Such solar protection measures are usually constituted by support posts that are connected to each other by slats of various dimensions, fixed or mobile, or sliding, or even photovoltaic slats.

The inclination of such slats can be varied in order to screen out sunlight or allow it to stream through, according to requirements.

The aim of the present invention is to provide a shield that is highly reliable and which makes it possible to combine the function of perimeter fence with a function of producing hot water or a function of sunbreaker with the function of producing hot water.

Within this aim, an object of the present invention is to provide a shield that makes it possible to exploit solar energy in both winter and summer.

Another object of the present invention is to provide a shield that is highly reliable, easy to implement and at low cost.

This aim, as well as these and other objects which will become better evident hereinafter, are achieved by a shield, comprising a pair of vertical posts connected by one or more plate-like elements, characterized in that each one of said plate-like elements accommodates heat exchange means adapted to allow the flow of a fluid to be heated, said fluid being conveyed within said plate-like elements through said vertical posts.

Further characteristics and advantages of the invention will become better apparent from the description of a preferred, but not exclusive, embodiment of the shield according to the present invention, illustrated by way of non-limiting example in the accompanying drawings, wherein:
Figure 1 is a schematic view of a shield according to the invention, shown in use as a fence;
Figure 2 is a side elevation view of the shield according to the present invention shown in Figure 1;
Figure 3 is a partially cross-sectional side elevation view of the shield according to the invention, shown in use as a sunbreaker;
Figure 4 is a schematic view of a possible application of the shield shown in Figure 3.

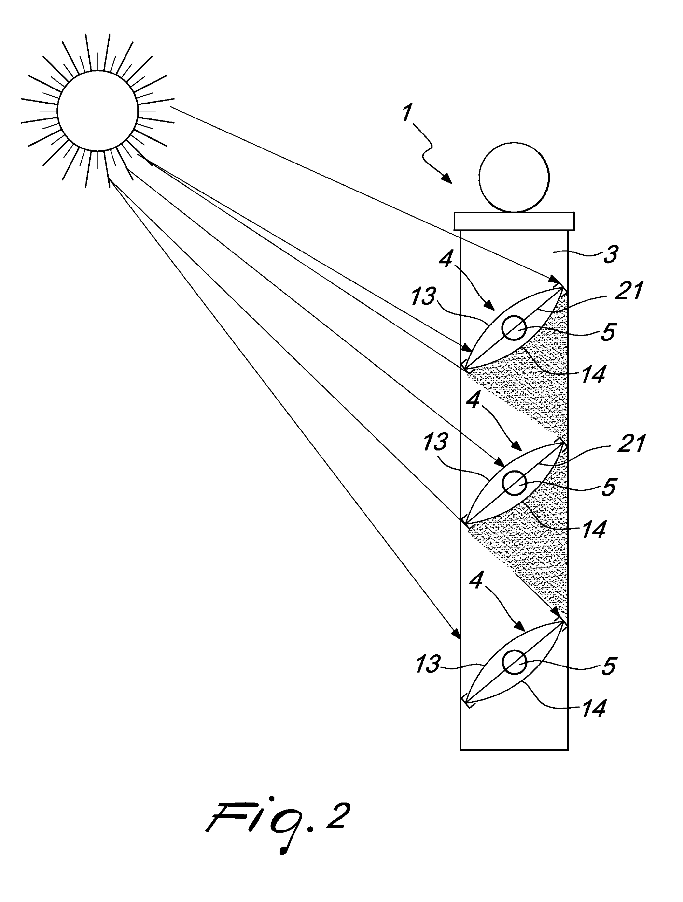

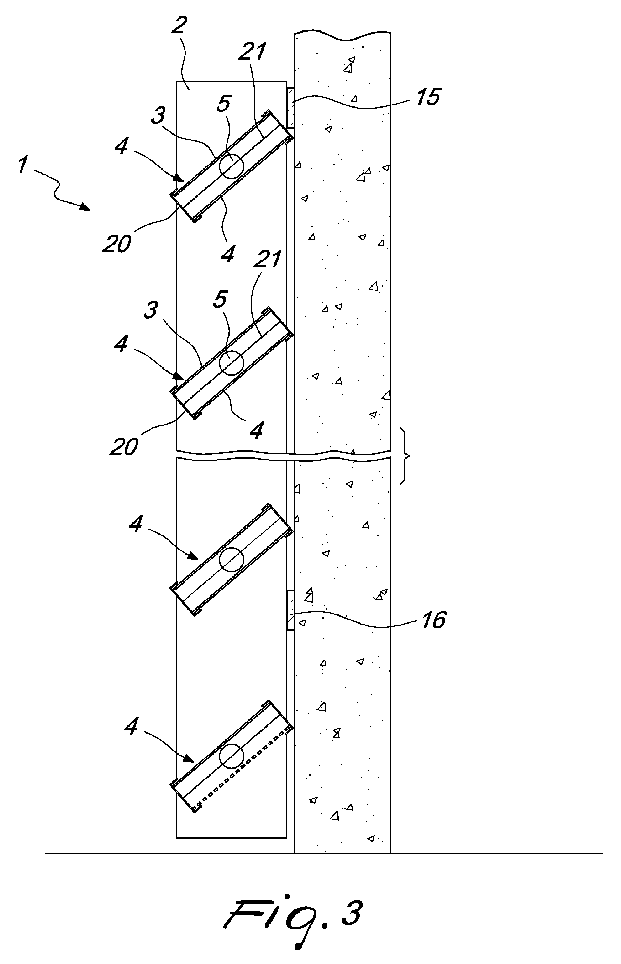

With reference to the figures, the shield according to the present invention, generally designated by the reference numeral 1, comprises a pair of vertical posts 2 and 3, which respectively support a plurality of plate-like elements 4 which are substantially oblong in cross-section, as shown in Figure 2, or which have a different cross-section, for example rectangular, as shown in Figure 3. Each plate-like element 4 accommodates within it heat exchange means 5 which allow the flow of a fluid internally.

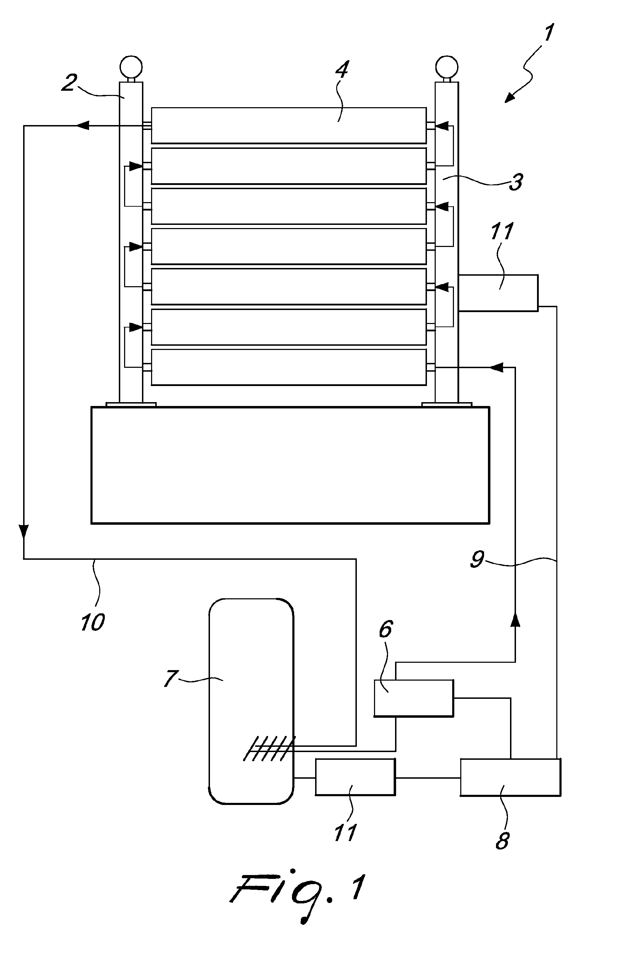

Figure 1 shows, with reference to the use of the invention as a fence, the circulation of the fluid which is pumped by pumping means 6 connected to accumulation means 7 and controlled by a controller 8. The pumping means 6 pump the fluid along a delivery path 9 within the post 3, which is connected to the heat exchanger accommodated inside the plate-like element 4 arranged lowest, near the ground. From the first plate-like element 4 the fluid flows into the second plate-like element, passing through the post 2, and proceeds, in a coiled manner, up until the highest plate-like element 4 and, from such element, it returns inside the post 2 in order to follow a return path 10 and flow into the accumulation means 7.

At least one probe 11 is provided for detecting the temperature of the fluid, which preferably is water.

Conveniently, each plate-like element constitutes a sort of fin which is arranged at an angle for example between 40° and 60° with respect to the horizontal, so as to be able to catch the sun rays both in winter, when the rays strike the Earth surface at an angle of 30° with respect to the Earth axis, and in summer, i.e. from April to September, when the sun rays have a different angle of incidence from that in winter.

It has been found that the optimal angle for an efficient use of the plate-like elements is around 57° with respect to the horizontal, but such inclination can obviously be varied according to requirements.

The above mentioned angle makes it possible, in summer, to have a partial shielding of the plate-like elements, so as to prevent the fluid that flows in the plate-like elements from excessively heating up and therefore boiling. The selected angle makes it possible to maintain a temperature of around 70°, which is useful for the aim of the invention.

Conveniently, each plate-like element 4 is covered, on its surface that is designed to be faced towards the sun, by a high-transparency film 13, for example Lexan®, while the other side of the plate-like element is covered with a shielding film 14.

The plate-like element 4 is made with a reduced cross-section, and therefore has a reduced thickness, so as to have the greatest possible exchange of heat.

The maximum cross-section of the plate-like element 4 is determined by the possibility of accommodating the heat exchange means 5 internally.

Each plate-like element 4 internally accommodates a plate 21 that separates the plate-like element 4 substantially into two halves and which passes through the heat exchanger 5, so as to increase the heat exchange surface.

Substantially, the fluid that flows into the heat exchanger 5 is separated into two parts which flow into each of the two halves into which the heat exchanger 5 is divided by the plate 21. The fluid thus comes into contact not only with the circumference portion of the heat exchanger 5, but also with the portion of plate 21 that passes through the exchanger.

The plate-like element 4 is substantially constituted by a covering housing 20 which accommodates the heat exchange means 5 and the plate 21 internally.

The plate-like elements 4 can be made of different materials (iron, copper, aluminum etc.), as well as, obviously, in several different lengths and shapes.

Therefore, the shield according to the invention can perform both the function of normal fence and also the function of heating water as would happen with a normal solar panel.

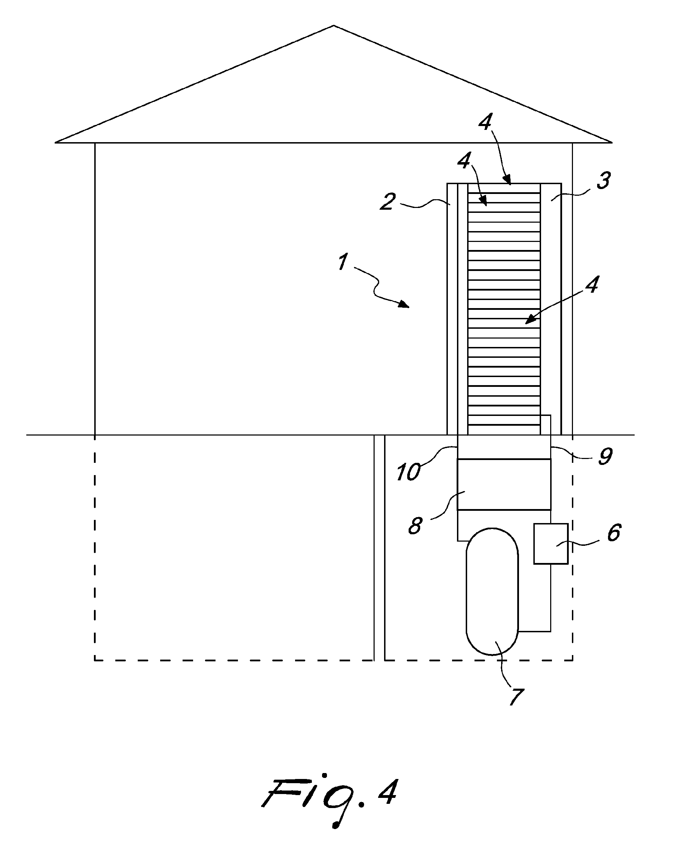

In addition, the shield according to the invention can be used as a sunbreaker for buildings, as illustrated in Figures 3 and 4.

In this type of use, in order to allow the fixing of the sunbreaker to the façade of a building, the side posts 2 and 3 are provided with fixing plates 15 and 16.

Conveniently, there can be a variable number of plate-like elements, for example a single, large plate-like element can be provided, with an internal channeling that acts as a heat exchanger, or a plurality of plate-like elements can be provided, arranged side-by-side, as shown in the Figures.

In practice it has been found that the shield according to the present invention fully achieves the intended aim and objects.

The invention, thus conceived, is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

The disclosures in Italian Patent Applications No. MI2010A000400 and No. MI2010A000726 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A shield (1), comprising a pair of vertical posts (2, 3) that are connected, between which one or more plate-like elements (4) are arranged, **characterized in that** each one of said plate-like elements (4) accommodates heat exchange means (5) adapted to allow the flow of a fluid to be heated, said fluid being conveyed within said plate-like elements (4) through said vertical posts (2, 3).

2. The shield according to claim 1, **characterized in that** said plate-like elements (4) are arranged at an angle with respect to the surface on which said vertical posts (2, 3) are to be rested.

3. The shield according to claim 1, **characterized in that** said plate-like elements are constituted by a housing (20) which accommodates internally said heat exchange means (5).

4. The shield according to claim 1, **characterized in that** said one or more plate-like elements (4) have a thickness that is adapted to allow the accommodation of said heat exchange means (5).

5. The shield according to claim 1, **characterized in that** said plate-like elements (4) internally comprise a plate (21) which is arranged in such a way as to cross said heat exchange means (5).

6. The shield according to claim 1, **characterized in that** said plate-like elements (4) are covered, on the surface designed to be directed toward the sun, by a high-transparency film (13) and, on the opposite surface, with a shielding film (14).

7. The shield according to one or more of the preceding claims, **characterized in that** it comprises pumping means (6) adapted to pump said fluid into said plate-like elements (4), said pumping means being connected to means (7) for accumulating said fluid.

8. The shield according to one or more of the preceding claims, **characterized in that** said fluid is conveyed by said pumping means (6), by means of a delivery path (9), to said plate-like elements (4), and is conveyed from said plate-like elements (4), by means of a return path (10), to said accumulation means (7).

9. The shield according to one or more of the preceding claims, **characterized in that** said pumping means (6) and said accumulation means (7) are controlled by a controller (8).

10. The shield according to one or more of the preceding claims, **characterized in that** it comprises at least one probe (11) adapted to detect the temperature of said fluid.

11. The shield according to one or more of the preceding claims, **characterized in that** said plate-like elements (4) are arranged at an angle comprised between 40° and 60° with respect to the horizontal.

12. The shield according to claim 10, **characterized in that** said plate-like elements (4) are arranged at an angle of 57° with respect to the horizontal.

13. The shield according to one or more of the preceding claims, **characterized in that** it is a fence.

14. The shield according to one or more of the preceding claims, **characterized in that** it is a sunbreaker which is adapted to be applied to the façade of a building.
